# EUROPÄISCHE PATENTSCHRIFT

(11) **EP 1 844 283 B1**
(45) Veröffentlichungstag und Bekanntmachung des Hinweises auf die Patenterteilung: **12.05.2010**
(21) Anmeldenummer: 06701477.9
(22) Anmeldetag: 24.01.2006

(54) **MEHRSTUFIGER WÄRMETAUSCHER UND ZYKLONABSCHEIDER ZUM EINSATZ IN EINEM SOLCHEN WÄRMETAUSCHER**
MULTI-STAGE HEAT EXCHANGER AND CYCLONE SEPARATOR FOR USE IN SUCH A HEAT EXCHANGER
ECHANGEUR THERMIQUE POLYETAGE ET CYCLONE SEPARATEUR DESTINE A ETRE EMPLOYE DANS UN TEL ECHANGEUR THERMIQUE

(30) Priorität: 25.01.2005 DE 102005003447
(43) Veröffentlichungstag der Anmeldung: 17.10.2007
(73) Patentinhaber: Klingbeil, Lothar, Dipl.-Ing., 51109 Köln (DE)
(72) Erfinder: Klingbeil, Lothar, Dipl.-Ing., 51109 Köln (DE)
(74) Vertreter: Maxton Langmaack & Partner
(86) Internationale Anmeldenummer: PCT/EP2006/000589
(87) Internationale Veröffentlichungsnummer: WO 2006/079498

(56) Entgegenhaltungen:
- WO-A-02/25196
- DE-A1- 3 024 837

## Beschreibung

Die Erfindung betrifft einen mehrstufigen Wärmetauscher zum Wärmetausch zwischen einem Gasstrom und einem feinkörnigen oder mehligen Gut, wobei
- der Wärmetauscher mehrere in Gasströmungsrichtung gesehen hintereinander angeordnete, jeweils wenigstens einen Zyklonabscheider umfassende Abscheiderstufen umfasst,
- jeder Zyklonabscheider umfasst:
   i) ein Gehäuse, das eine Gesamthöhe aufweist und eine Seitenwand umfasst,
   ii) eine Gaszuleitung, durch welche das mit dem abzuscheidenden Gut beladene Gas in den Zyklonabscheider einströmt,
   iii) eine Gasableitung, durch welche das von dem Gut gereinigte Gas aus dem Zyklonabscheider ausströmt, und
   iv) eine am unteren Ende des Gehäuses angeordnete Austrittsöffnung zum Ausschleusen des abgeschiedenen Gutes,
- die Gasableitung jeweils eines Zyklonabscheiders mit der Gaszuleitung des in Gasströmungsrichtung nächstfolgenden Zyklonabscheiders über eine Gasstufe verbunden ist.

Zyklonabscheider dienen zum Abscheiden von feinkörnigem Gut aus strömenden Gasen durch Fliehkraftwirkung und sind aus der Praxis seit langem bekannt. Gemäß ihrem typischen Aufbau bestehen sie aus einem zylindrischen, nach unten meist konisch zulaufenden Gehäuse, in den der mit dem abzuscheidenden Feststoffpartikeln beladene Gasstrom unmittelbar unterhalb eines das Gehäuse nach oben hin verschließenden Deckels tangential eingeleitet wird, wobei sich in dem Gehäuse eine Drallströmung ausbildet. Dabei werden die Partikel durch Fliehkräfte an die Wand geschleudert und dort infolge der Reibung stark abgebremst. Die abgebremsten Partikel rutschen sodann in dem Behälter abwärts und gelangen durch eine am unteren Ende des Abscheidergehäuses vorgesehene Austrittsöffnung in einen Sammelbehälter oder, falls der Zyklonabscheider Bestandteil beispielsweise eines Wärmetauschers ist, in die Gaszuleitung des nächst unteren Abscheiders. Der abgereinigte Gasstrom wiederum wird durch ein zentrisch im oberen Deckel angeordnetes Tauchrohr aus dem Abscheidergehäuse abgezogen.

Aus Zyklonabscheidern aufgebaute, mehrstufige Wärmetauscher - in der Regel in vierbis sechsstufiger Ausführung mit angebundenem Kalzinator - kommen heutzutage als Vorwärmer in der Zementindustrie standardmäßig zum Einsatz. Auch in der Kalkindustrie finden sie Verwendung für Kleinstkörnungen bis zu 2 mm Korngröße, hier insbesondere bei der Weichbranntproduktion mit angeschlossener Drehofenlinie.

Dabei sind die verschiedenen jeweils aus einem Zyklonabscheider bestehenden Abscheiderstufen abwechselnd versetzt übereinander angeordnet, wie beispielsweise in der EP 0 937 957 A2 gezeigt. Die Abscheiderstufen sind durch sogenannte Hebegasstufen, d.h. Gasleitungen mit aufsteigendem Gasstrom, miteinander verbunden. Dabei strömt das abgereinigte Gas aus einem Zyklonabscheider durch die Hebegasstufe, in der es wiederum mit dem zu erwärmenden Gut beaufschlagt wird, aufwärts zum nächsthöheren Zyklonabscheider. Insgesamt wird der Wärmetauscher also von einem aus. dem Brennofen, beispielsweise einem Drehofen, austretenden Heißgasstrom von unten nach oben durchströmt, wobei er einen im Gegenzug von der obersten Abscheiderstufe in Richtung des Ofens nach unten fallenden Materialstrom aufheizt.

Im einzelnen wird das feinkörnige Brenngut in die den obersten Zyklonabscheider speisende Hebegasstufe seitlich aufgegeben und strömt mit einem die Hebegasstufe durchströmenden Heißgasstrom zusammen aufwärts in den ersten (d.h. obersten) Abscheider, wobei zwischen dem Heißgas und dem Brenngut ein Temperaturaustausch erfolgt. Im ersten Zyklonabscheider erfolgt die oben bereits beschriebene Trennung des Brenngutes von dem Gasstrom. Das Brenngut wird sodann aus dem Abscheider nach unten in eine Fallleitung ausgetragen und in die den zweiten (zweitobersten) Abscheider speisende Hebegasstufe seitlich aufgegeben, von wo es zusammen mit dem in der Hebegasstufe aufsteigenden Heißgasstrom unter weiterem Wärmeaustausch in den zweiten Abscheider gelangt. Dort erfolgt wiederum eine Abtrennung von dem Gasstrom, woraufhin das weiter erhitzte Brenngut in die nächstuntere Abscheiderstufe unter weiterem Aufheizen transportiert wird usw. Nach Erreichen der untersten Abscheiderstufe wird das nunmehr stark erhitzte Gut in den Ofen eingeleitet, wo eine thermische Behandlung beispielsweise zu Branntkalk oder Zementklinker erfolgt.

Wie eingangs beschrieben, sind die aus der Praxis bekannten Zyklonabscheider derart aufgebaut, dass der gutbeladene Gasstrom direkt unterhalb des Gehäusedeckels tangential in den Abscheider einströmt und in abgereinigter Form nach oben aus dem Abscheidergehäuse abströmt. Entsprechend weisen die aus derartigen Abscheidern aufgebauten Wärmetauscher eine systembedingt große Bauhöhe auf, was mit einem hohen Druckverlust in den die einzelnen Abscheiderstufen verbindenden Hebegasstufen verbunden ist.

Ferner hat die erforderliche Bauhöhe auch direkten Einfluss auf die Anlagenkosten. Schließlich ist die seitliche Einbringung des Materials in den die einzelnen Hebegasstufen durchströmenden Heißgasstrom nicht förderlich für eine homogene Verteilung des Materials im Gasstrom und führt somit zu einem unbefriedigenden Wärmeaustausch.

In der DE 42 22 593 A1 ist ein aus Zyklonabscheidern aufgebauter Wärmetauscher beschrieben, bei dem die Zyklonabscheider im wesentlichen in einer Ebene angeordnet sind. Dies wird dadurch erreicht, dass die das Gas aus dem jeweiligen Zyklonabscheider abziehende Leitung durch das trichterförmige Unterteil des Zyklonabscheiders nach außen geführt wird und über einen 180°-Krümmer in die zum Zyklonabscheider der nächsten Stufe führende Gasleitung mit aufsteigendem Gasstrom (Hebegasstufe) übergeht, wobei letztere tangential unterhalb des Gehäusedeckels des nächsten Zyklonabscheiders an diesen angeschlossen ist. Dem offensichtlichen Vorteil der durch diesen Aufbau erreichbaren sehr niedrigen Bauhöhe stehen eine Reihe gravierender Nachteile gegenüber. So kann es bei zu geringer Gasgeschwindigkeit an dem jeweiligen Boden der 180°-Krümmer zu Materialansammlungen und -anbackungen kommen, welche gesondert aus dem System entfernt werden müssen. Zudem kann der Materialaustrag aus dem Zyklonabscheider durch das ebenfalls nach unten abgeführte Tauchrohr behindert werden. Schließlich erfolgt auch bei diesem Wärmetauscher eine seitliche Aufgabe des Materials in die Gasstufen, was, wie oben erwähnt, zu einer inhomogenen Verteilung des Gutes im Gasstrom führt.

Die WO 02/25 196 A1 beschreibt einen mehrstufigen Wärmetauscher zum Wärmetausch zwischen einem Gasstrom und einem feinkörnigen oder mehligen Gut, wobei
- der Wärmetauscher mehrere in Gasströmungsrichtung gesehen hintereinander angeordnete, jeweils wenigstens einen Zyklonabscheider umfassende Abscheiderstufen umfasst,
- jeder Zyklonabscheider umfasst:
   i) ein Gehäuse, das eine Gesamthöhe aufweist und eine Seitenwand umfasst,
   ii) eine Gaszuleitung, durch welche das mit dem abzuscheidenden Gut beladene Gas in den Zyklonabscheider einströmt,
   iii) eine Gasableitung, durch welche das von dem Gut gereinigte Gas aus dem Zyklonabscheider ausströmt, und
   iv) eine am unteren Ende des Gehäuses angeordnete Austrittsöffnung zum Ausschleusen des abgeschiedenen Gutes,
- die Gasableitung jeweils eines Zyklonabscheiders mit der Gaszuleitung des in Gasströmungsrichtung nächstfolgenden Zyklonabscheiders über eine Gasstufe verbunden ist.
Bei diesem bekannten Wärmetauscher ist eine Gasstufe als Sinkgasstufe ausgebildet, wohingegen die übrigen Gasstufen als Hebegasstufen ausgebildet sind. Außerdem ist bei diesem bekannten Wärmetauscher zum Einen vorgesehen, dass bei dem Zyklonabscheider, welcher in Gasströmungsrichtung vor der Sinkgasstufe angeordnet ist, die Gasableitung in die Unterseite des Gehäuses mündet, und zum Anderen, dass bei dem Zyklonabscheider, welcher in Gasströmungsrichtung hinter der Sinkgasstufe angeordnet ist, die Gaszuleitung in die obere Hälfte des Gehäuses mündet.

Die DE 30 24 837A1 beschreibt einen mehrstufigen Wärmetauscher zum Wärmetausch zwischen einem Gasstrom und einem feinkörnigen oder mehligen Gut, wobei
- der Wärmetauscher mehrere in Gasströmungsrichtung gesehen hintereinander angeordnete, jeweils wenigstens einen Zyklonabscheider umfassende Abscheiderstufen umfasst,
- jeder Zyklonabscheider umfasst:
   i) ein Gehäuse, das eine Gesamthöhe aufweist und eine Seitenwand umfasst,
   ii) eine Gaszuleitung, durch welche das mit dem abzuscheidenden Gut beladene Gas in den Zyklonabscheider einströmt,
   iii) eine Gasableitung, durch welche das von dem Gut gereinigte Gas aus dem Zyklonabscheider ausströmt, und
   iv) eine am unteren Ende des Gehäuses angeordnete Austrittsöffnung zum Ausschleusen des abgeschiedenen Gutes,
- die Gasableitung jeweils eines Zyklonabscheiders mit der Gaszuleitung des in Gasströmungsrichtung nächstfolgenden Zyklonabscheiders über eine Gasstufe verbunden ist.
Bei diesem bekannten Wärmetauscher sind alle Gasstufen als Hebegasstufen ausgebildet. Außerdem ist bei diesem bekannten Wärmetauscher vorgesehen, dass bei jedem Zyklonabscheider die Gaszuleitung in die untere Hälfte des Gehäuses mündet.

Die DE 1 542 462 A beschreibt einen mehrstufigen Wärmetauscher zum Wärmetausch zwischen einem Gasstrom und einem feinkörnigen oder mehligen Gut, wobei
- der Wärmetauscher mehrere in Gasströmungsrichtung gesehen hintereinander angeordnete, jeweils wenigstens einen Zyklonabscheider umfassende Abscheiderstufen umfasst,
- jeder Zyklonabscheider umfasst:
   i) ein Gehäuse, das eine Gesamthöhe aufweist und eine Seitenwand umfasst,
   ii) eine Gaszuleitung, durch welche das mit dem abzuscheidenden Gut beladene Gas in den Zyklonabscheider einströmt,
   iii) eine Gasableitung, durch welche das von dem Gut gereinigte Gas aus dem Zyklonabscheider ausströmt, und
   iv) eine am unteren Ende des Gehäuses angeordnete Austrittsöffnung zum Ausschleusen des abgeschiedenen Gutes,
- die Gasableitung jeweils eines Zyklonabscheiders mit der Gaszuleitung des in Gasströmungsrichtung nächstfolgenden Zyklonabscheiders über eine Gasstufe verbunden ist.
Bei diesem bekannten Wärmetauscher sind zwei Gasstufen als Vorheizräume, die jeweils aus einer Hebegasstufe, einem daran anschließenden Krümmer und einer daran anschließenden Sinkgasstufe bestehen, und die übrigen Gasstufen als Hebegasstufen ausgebildet. Außerdem ist bei diesem bekannten Wärmetauscher vorgesehen, dass das Gut seitlich schräg in die jeweilige Hebegasstufe der Vorheizräume aufgegeben wird. Weiter ist bei diesem bekannten Wärmetauscher vorgesehen, dass bei jedem Zyklonabscheider, der in Gasströmungsrichtung hinter einem Vorheizraum angeordnet ist, die Gaszuleitung in die obere Hälfte des Gehäuses mündet.

Es ist daher Aufgabe der Erfindung, einen Wärmetauscher mit geringer Bauhöhe zu schaffen, bei dem die Nachteile der vorstehend beschriebenen Wärmetauscher vermieden werden. Insbesondere soll der zu schaffende Wärmetauscher also ohne Gasleitungen mit starken Rohrkrümmungen, die regelmäßig zu Materialansammlungen und -anbackungen in der Gasleitung führen, auskommen.

Die Aufgabe wird erfindungsgemäß mit einem Wärmetauscher gemäß Patentanspruch 1 gelöst. Weitere Ausführungsformen sind in den Unteransprüchen beschrieben.

Die Erfindung schlägt einen mehrstufigen Wärmetauscher zum Wärmetausch zwischen einem Gasstrom und einem feinkörnigen oder mehligen Gut vor, wobei:
- der Wärmetauscher mehrere in Gasströmungsrichtung gesehen hintereinander angeordnete, jeweils wenigstens einen Zyklonabscheider umfassende Abscheiderstufen umfasst,
- jeder Zyklonabscheider umfasst:
   i) ein Gehäuse, das eine Gesamthöhe aufweist und eine Seitenwand umfasst,
   ii) eine Gaszuleitung, durch welche das mit dem abzuscheidenden Gut beladene Gas in den Zyklonabscheider einströmt,
   iii) eine Gasableitung, durch welche das von dem Gut gereinigte Gas aus dem Zyklonabscheider ausströmt, und
   iv) eine am unteren Ende des Gehäuses angeordneten Austrittsöffnung zum Ausschleusen des abgeschiedenen Gutes,
- die Gasableitung jeweils eines Zyklonabscheiders mit der Gaszuleitung des in Gasströmungsrichtung nächstfolgenden Zyklonabscheiders über eine Gasstufe verbunden ist,
- wenigstens zwei Gasstufen als Sinkgasstufe ausgebildet sind,
- das zu erwärmende Gut oberseitig in jede Sinkgasstufe aufgegeben wird;
- bei wenigstens einem Zyklonabscheider, welcher in Gasströmungsrichtung hinter einer Sinkgasstufe angeordnet ist, die Gaszuleitung bezogen auf die Gesamthöhe des Gehäuses in die untere Hälfte des Gehäuses oder auf mittlerer Höhe in das Gehäuse mündet.

Bei dem erfindungsgemäßen Wärmetauscher sind wenigstens zwei Sinkgasstufen vorgesehen. Eine Sinkgasstufe im Sinne der vorliegenden Erfindung ist gekennzeichnet durch einen fallenden Gasstrom, bei der das aus dem in Strömungsrichtung vorgeordneten Abscheider ausströmende Gas folglich nicht angehoben werden muss, sondern nach unten strömt. Durch die Verwendung von Sinkgasstufen ist es möglich, zwei aufeinander folgende Abscheiderstufen im Wärmetauscher auf einer Höhe anzuordnen, wodurch dieser deutlich kompakter, d.h. mit im Vergleich zum Stand der Technik geringerer Bauhöhe, ausgeführt werden kann. Im Falle einer Sinkgasstufe ist es sogar möglich die jeweils folgende Abscheiderstufe niedriger als die vorhergehende anzuordnen. In jedem Falle erfordert eine Sinkgasstufe keine starke Umlenkung des Gasstroms nach oben in einem 180°-Krümmer, was mit den bekannten Nachteilen verbunden ist.

Wegen des bei den Sinkgasstufen nicht mehr erforderlichen Energieaufwandes zur Anhebung des Gutes durch den - in einer Hebegasstufe aufsteigenden, in einer Sinkgasstufe jedoch fallenden bzw. in einer Quergasstufe im wesentlichen horizontal verlaufenden - Gasstrom, kann in den Sinkgasstufen eine erheblich niedrigere Gasgeschwindigkeit gewählt werden. Dies führt insgesamt zu einem niedrigeren Druckverlust und, wie erwähnt, damit verbunden zu einem niedrigeren Energiebedarf.

Bei den aus dem Stand der Technik bekannten Hebegasstufen wird das aus der Austrittsöffnung eines Abscheiders fallende Gut seitlich in einen aufsteigenden Gasstrom aufgegeben. Das bedingt einen für das Rohrsystem verschleißträchtigen hohen Impulsaustausch zwischen Gut und Gasstrom und damit verbunden eine nicht optimale Verteilung des Gutes im Gasstrom. Bei den erfindungsgemäß vorgesehenen Sinkgasstufen hingegen kann das Gut auch von oben in die Gasstufe aufgegeben werden, wobei der Impuls des Gasstroms und des fallenden Gutstroms im Falle der Sinkgasstufe sogar gleichgerichtet ist. Somit kann eine verbesserte Verteilung des Gutes über den gesamten Querschnitt insbesondere der Sinkgasstufe erreicht werden.

Da bei wenigstens einem Zyklonabscheider, der in Gasströmungsrichtung hinter einer Sinkgasstufe angeordnet ist, die Gaszuleitung bezogen auf die Gesamthöhe des Gehäuses in die untere Hälfte des Gehäuses oder auf mittlerer Höhe in das Gehäuse mündet, ist eine Positionierung von jeweils zwei Zyklonabscheidern, die durch die Sinkgasstufe miteinander verbunden sind, auf annähernd gleicher Höhe möglich, was die bereits genannten Vorteile einer kompakten Bauform des Wärmetauschers insgesamt mit sich bringt.

Nach einer vorteilhaften Ausgestaltung der Erfindung ist vorgesehen, dass in Gasströmungsrichtung gesehen jede zweite Gasstufe als Sinkgasstufe oder Quergasstufe ausgebildet ist. Eine Quergasstufe im Sinne der vorliegenden Erfindung ist wiederum gekennzeichnet durch einen im wesentlichen horizontalen Gasstrom. Auch hier muss somit der Gasstrom nicht angehoben werden. So sind bei einem erfindungsgemäßen Wärmetauscher im Falle von sich jeweils mit Hebegasstufen abwechselnden Sinkgasstufen jeweils zwei Abscheiderstufen auf etwa gleicher Höhe angeordnet, wodurch sich eine signifikante Halbierung der Bauhöhe ergibt. Sinnvoll ist eine solche Anordnung insbesondere bei vier- oder sechsstufig ausgelegten Wärmetauschern.

Es kann vorgesehen sein, dass bei dem Zyklonabscheider, der in Gasströmungsrichtung unmittelbar hinter einer Sinkgasstufe angeordnet ist, das Gehäuse einen oberen Gehäuseabschnitt und einen konisch nach unten zulaufenden unteren Gehäuseabschnitt umfasst. In diesem Zyklonabscheider erfolgt auf Höhe der Gaseinleitung infolge des dem Gasstrom aufgezwungenen Dralls zunächst eine primäre Abscheidung der Feststoffpartikel, die insbesondere dann besonders effektiv ist, wenn das Gehäuse auf dieser Höhe durch den nach unten hin spitz zulaufenden Gehäuseabschnitt bereits einen geringen Durchmesser aufweist. Innerhalb des Gehäuses steigt der Gasstrom mit dem noch nicht abgeschiedenen Gutanteil sodann spiralförmig auf, wobei es zu einer weiteren Abscheidung der Partikel kommt (sekundäre Abscheidung), die im wesentlichen durch eine Verringerung der Gasgeschwindigkeit und somit des Hebe- und Tragvermögens des Gasstroms bewirkt wird.

Der obere Gehäuseabschnitt kann verschieden gestaltet sein. So ist eine zylindrische Form ebenso möglich wie eine konische Form, wobei es besonders vorteilhaft ist, wenn der obere und der untere Gehäuseabschnitt einen einheitlichen Konus ausbilden. Eine weitere vorteilhafte Möglichkeit besteht darin, den oberen Gehäuseabschnitt nach oben hin konisch zulaufend auszubilden, wodurch sich insgesamt eine rhombische Querschnittsform ergibt. Dadurch ergibt sich eine im Vergleich zu konventionellen Querschnittsformen (oberer Gehäuseteil zylindrisch) geringere Oberfläche, was mit einer reduzierten Wärmeabstrahlung verbunden ist.

Eine verbesserte Drallströmung kann dadurch erreicht werden, dass das Gehäuse einen Innenkegel aufweist, wobei der Innenkegel als zentrale konische Säule sich von der Oberseite des Gehäuses bis zu seiner unteren Spitze erstrecken kann, was der Konstruktion zusätzliche Stabilität verleiht. Durch den Einbau eines Innenkegels wird weitgehend eine Strömungsverwirbelung im Kernbereich des Abscheiders vermieden.

Durch spezielle konstruktive Maßnahmen kann neben der oben erläuterten primären und sekundären Abscheidung ein weiterer Abscheidungseffekt (tertiäre Abscheidung) erzielt werden. Dazu ist nach einer vorteilhaften Ausgestaltung der Erfindung an der Innenwand des Gehäuses eine Ringbarriere vorgesehen, die vorzugsweise im oberen Gehäuseabschnitt unterhalb der Gasableitung abgeordnet ist. Trifft der im Gehäuse spiralförmig aufgestiegene Gasstrom gegen eine solche Ringbarriere, die beispielsweise als ein aus einer Mauerungsnase bestehender umlaufender Keil ausgebildet sein kann, so werden die in dem Gasstrom noch vorhandenen Restpartikel an dieser praktisch vollständig abgeschieden, so dass ein annähernd partikelfreier Gasstrom über die Gasableitung aus dem Abscheider abströmt.

Die Gaszuleitung kann auf verschiedene Weise an das Gehäuse angeschlossen sein. So ist zunächst ein einfacher tangentialer Anschluss, wie er bei den meisten aus dem Stand der Technik bekannten Abscheidertypen vorgesehen ist, möglich. Nach einer besonders vorteilhaften Ausgestaltung der Erfindung ist es jedoch möglich, die Gaszuleitung derart zu gestalten, dass sie über eine schraubenförmige Einlaufspirale in das Gehäuse mündet. Hierdurch ergibt sich ein besonders stetiger Übergang in den Abscheider, wodurch störende Verwirbelungen vermieden werden.

Die Gasableitung kann ebenfalls auf verschiedene Weise gestaltet sein. So kann sie einerseits in an sich bekannter Weise mittig auf der Oberseite des Gehäuses in das Gehäuse münden (Zentralausströmung). Hierbei ist es besonders vorteilhaft, wenn die Gasableitung als Tauchrohr in das Gehäuse hineinragt. In diesem Fall wirkt der Rand des in das Gehäuse hineinragenden Tauchrohrs als Ringbarriere und bewirkt somit eine auf dem tertiären Abscheidereffekt basierende Partikelabscheidung. Alternativ kann die Gasableitung auch in die Seitenwand des Gehäuses münden (Wandausströmung). Ist das Gehäuse bezüglich seines Querschnitts als Rhombus ausgebildet, so ist auch eine kombinierte Zentral- und Wandausströmung möglich, indem der sich nach oben verjüngende Kegel des oberen Gehäuseabschnitts auf seiner Mantelfläche bis zur oberen Spitze angeschnitten und an diesen Anschnitt die Gasableitung angesetzt wird.

Die Gasableitung selbst kann im Falle der Zentralausströmung senkrecht nach oben erfolgen, so dass bei Einbau in einen Wärmetauscher der oben beschriebenen Art in diesem Falle eine Hebegasstufe vorläge. Die Gasableitung kann jedoch nach vertikaler mittiger Abströmung zur Seite oder nach unten abgelenkt werden. Gleiches gilt für die Wandabströmung bei der, wie bereits erwähnt, die Gasableitung in die Seitenwand des Gehäuses mündet.

Für die Austrittsöffnung aus dem Zyklonabscheider ergeben sich ebenfalls verschiedene Gestaltungsmöglichkeiten. So kann sie neben einem ovalen oder kreisförmigen Querschnitt auch einen ringförmigen Öffnungsquerschnitt aufweisen. Vorzugsweise wird im Falle einer kreisförmigen Austrittsöffnung die innere Begrenzung des Ringquerschnitts durch einen in den unteren Gehäuseabschnitt des Abscheiders hineinragenden Innenkegel gebildet, was zu einer verbesserten Verteilung des abgeschiedenen Gutes über den Ringquerschnitt führt.

Die Austrittsöffnung des Abscheiders kann durch einen geeigneten Schließmechanismus vollständig oder auch nur teilweise geöffnet bzw. geschlossen werden, um ein gleichmäßiges Füllstandsniveau im Abscheider zu ermöglichen.

Nach einer weiteren vorteilhaften Ausgestaltung der Erfindung ist vorgesehen, dass sich an die Austrittsöffnung mehrere Fallleitungen anschließen. Durch den Einsatz mehrerer Fallleitungen kann das in dem Zyklonabscheider abgeschiedene Gut besonders gleichmäßig zur nächsten Gasstufen, sei es eine Hebegas-, Sinkgas- oder Quergasstufe, transportiert werden. Üblicherweise haben die Fallleitungen einen runden Querschnitt. Nach einer besonderen Ausgestaltung der Erfindung ändert sich der Querschnitt über den Verlauf der Fallleitung. So kann er von einem runden Querschnitt in einen schlitzförmigen Auslaufquerschnitt übergehen. Die Fallleitung kann über ihren schlitzförmigen Auslaufquerschnitt an die entsprechende Gasstufe, beispielsweise von oben an eine Sinkgasstufe, angeschlossen sein.

Nach einer weiteren vorteilhaften Ausgestaltung der Erfindung weist die wenigstens eine Fallleitung eine Dosiervorrichtung auf. Hierdurch wird erreicht, dass das Gut stets mit optimalem Massenstrom der entsprechenden Gasstufe zugeleitet wird. Der optimale Massenstrom bemisst sich nach dem jeweils vorherrschenden Volumenstrom, dem Strömungsprofil und der Temperatur in der Gasstufe sowie den geometrischen Gegebenheiten.

Im folgenden wird die Erfindung anhand einer Ausführungsbeispiele der Erfindung darstellenden Zeichnung näher erläutert. Es zeigen:
- Fig. 1: den Aufbau eines erfindungsgemäßen vierstufigen Wärmetauschers mit sich abwechselnden Hebe- und Sinkgasstufen in schematisierter Seitenansicht,
- Fig. 2: den Wärmetauscher der Fig. 1 ausschnittsweise, wobei zwei Zyklonabscheider durch eine Quergasstufe miteinander verbunden sind,
- Fig. 3: einen erfindungsgemäßen Zyklonabscheider in schematisierter Schnittansicht,
- Fig. 4: a-d verschiedene Gehäusegrundformen eines erfindungsgemäßen Zyklonabscheiders in schematischer Schnittansicht,
- Fig. 5: a-h verschiedene Varianten der Gaszuleitung und -ableitung für die verschiedenen Zyklonabscheidergrundformen gemäß Fig. 4 in schematischer Schnittansicht (Fig. 5h in Draufsicht),
- Fig. 6: a-c verschiedene Varianten der Innengeometrie eines erfindungsgemäßen Zyklonabscheiders mit konischer Gehäuseform in schematischer Schnittansicht,
- Fig. 7: a-c verschiedene Varianten der Gasabströmung bei einem erfindungsgemäßen Zyklonabscheider,
- Fig. 8: eine vorteilhafte Gestaltung der Austrittsöffnung bei einem erfindungsgemäßen Zyklonabscheider,
- Fig. 9: a-b verschiedene Querschnittsgeometrien der Austrittsöffnung eines erfindungsgemäßen Zyklonabscheiders und
- Fig. 10: den Aufbau eines aus dem Stand der Technik bekannten Wärmetauschers in schematisierter Seitenansicht.

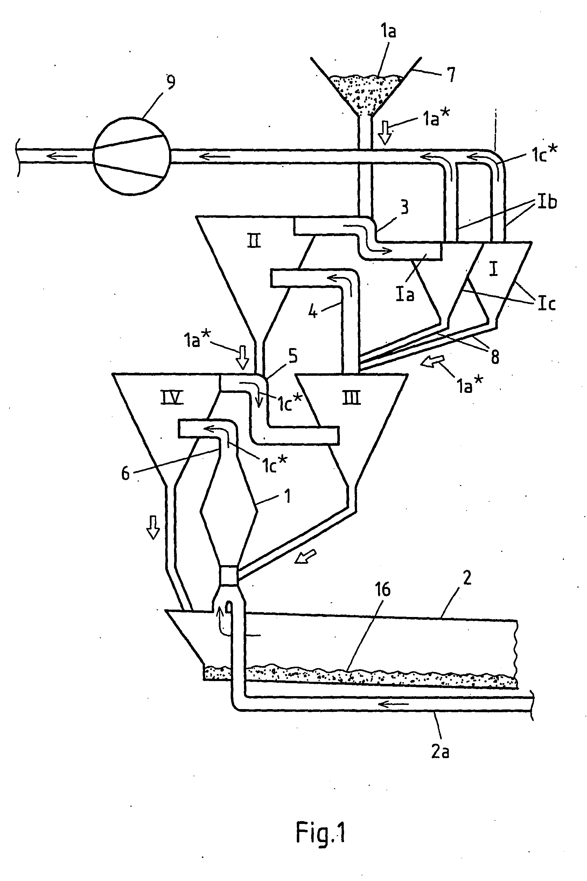

Der erfindungsgemäße Wärmetauscher gemäß Fig. 1 ist vierstufig aufgebaut und umfasst entsprechend vier Zyklonabscheiderstufen I, II, III, IV. Ferner umfasst er einen integrierten Kalzinator 1. Der Wärmetauscher ist vorliegend in Produktionsrichtung einem Drehrohrofen 2 vorgeordnet und dient beispielsweise der Vorwärmung von Zementrohmehl oder auch Kalksteinkleinstkörnungen 1a, welche in dem Drehrohrofen 2 zu Zementklinker oder Branntkalk 1 b gebrannt werden. Die Nummerierung der Zyklonabscheider I, II, III, IV erfolgt in Transportrichtung des Gutes 1 a, welche durch die Pfeile 1a* markiert ist, während die Richtung der Strömung des Gases durch den Wärmetauscher mit den Pfeilen 1c* gekennzeichnet ist. Von den vier Abscheiderstufen I, II, III, IV ist allein der als Doppelabscheider ausgebildete Zyklonabscheider der Stufe I in konventioneller, d.h. aus dem Stand der Technik bekannter Form ausgebildet. Die Zyklonabscheider der Stufen II, III, IV sind in erfindungsgemäßer Weise ausgebildet, d.h. ihre Gaszuleitungen münden in das jeweilige Gehäuse in dessen unterer Hälfte. Wie der Fig. 1 zu entnehmen ist, wechseln sich bei dem dargestellten Wärmetauscher in erfindungsgemäßer Weise Hebegasstufen und Sinkgasstufen ab. So sind die oberen Abscheiderstufen I, II durch eine Sinkgasstufe 3 verbunden, ebenso die unteren Abscheiderstufen III, IV ( Sinkgasstufe 5). Dagegen sind die Abscheiderstufen II und III durch eine Hebegasstufe 4 verbunden; ferner strömt das Heißgas vom Kalzinator 1 in die Abscheiderstufe IV ebenfalls durch eine Hebegasstufe 6. Durch den alternierenden Einsatz von Hebegas- und Sinkgasstufen kann gegenüber konventionellen Wärmetauschern die Bauhöhe signifikant gesenkt werden.

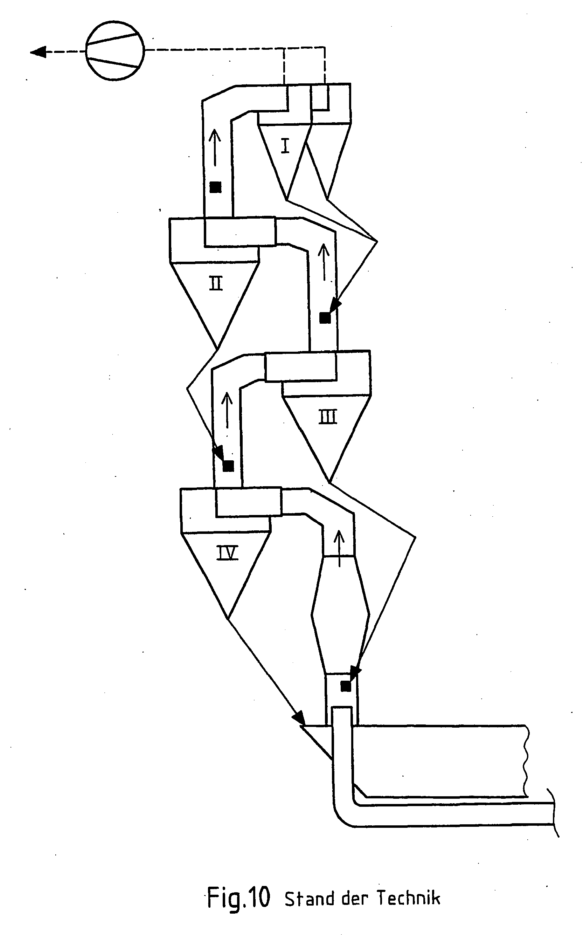

Ein aus dem Stand der Technik bekannter vierstufiger Wärmetauscher ist in Fig. 10 abgebildet. Ein Vergleich der Wärmetauscher zeigt deutlich, dass der erfindungsgemäße Wärmetauscher bei leicht vergrößerter Grundfläche eine erheblich niedrigere Bauhöhe aufweist.

Im Betrieb des Wärmetauschers wird das Gut 1 a aus einer Dosiereinrichtung 7 in den Wärmetauscher aufgegeben und in der Sinkgasstufe 3 mit dem Heißgasstrom durchmischt, wobei durch die oberseitige Aufgabe des Gutes 1 a eine besonders homogene Durchmischung erreicht wird. Gemeinsam mit dem Gasstrom gelangt das Gut 1 a in die Abscheiderstufe I, wo es abgetrennt wird und über Fallleitungen 8 in die nächsthöher temperierte Hebegasstufe 4 eingeschleust wird. Von dort wird es zusammen mit dem aufsteigenden Gasstrom in die Abscheiderstufe II geleitet, dort abgetrennt und über eine weitere Fallleitung, die ihrerseits in mehrere einzelnen Fallleitungen aufgeteilt sein kann, in die Sinkgasstufe 5 geleitet. Dort wird es wiederum mit dem Heißgasstrom vermischt und gelangt in die Abscheiderstufe III. Hier erfolgt eine erneute Abtrennung, woraufhin das Gut 1a durch eine weitere Fallleitung seitlich in den Kalzinator 1 gelangt. Dieser wird durch einen direkt aus dem Drehofen 2 austretenden Heißgasstrom sowie durch tertiäre Verbrennungsluft 2a gespeist. Durch diesen Gasstrom wird das Gut 1 a Schließlich über eine Hebestufe in die Abscheiderstufe IV transportiert und gelangt von dort in den Drehofen.

Der Gasstrom, gekennzeichnet durch die Pfeile 1c*, steigt in entgegengesetzter Richtung zum Gut 1a im Wärmetauscher durch die einzelnen Abscheiderstufen auf, kühlt durch die Wechselwirkung mit dem fallenden Gut 1 a sukzessive ab und wird Schließlich durch einen Systemventilator 9 aus dem Wärmetauscher abgezogen.

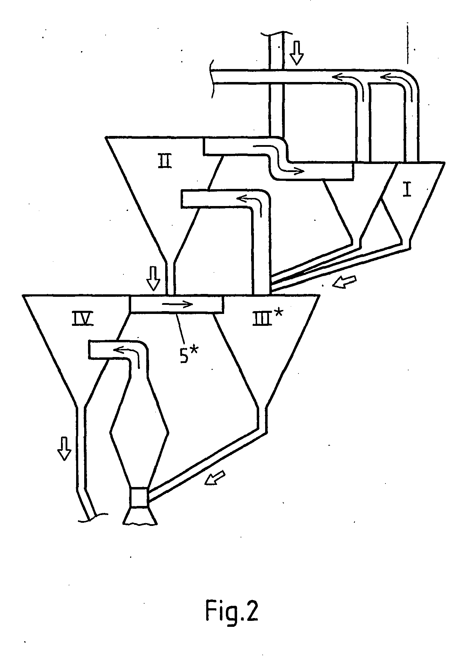

Der Wärmetauscher gemäß Fig. 2 unterscheidet sich von dem der Fig. 1 lediglich darin, dass die Sinkgasstufe 5 durch eine Quergasstufe 5* ersetzt ist, in welche das in der Abscheiderstufe II abgeschiedene Gut aufgegeben wird. Die Abscheiderstufe III* des Wärmetauschers der Fig. 2 ist in aus dem Stand der Technik bekannter Weise ausgebildet.

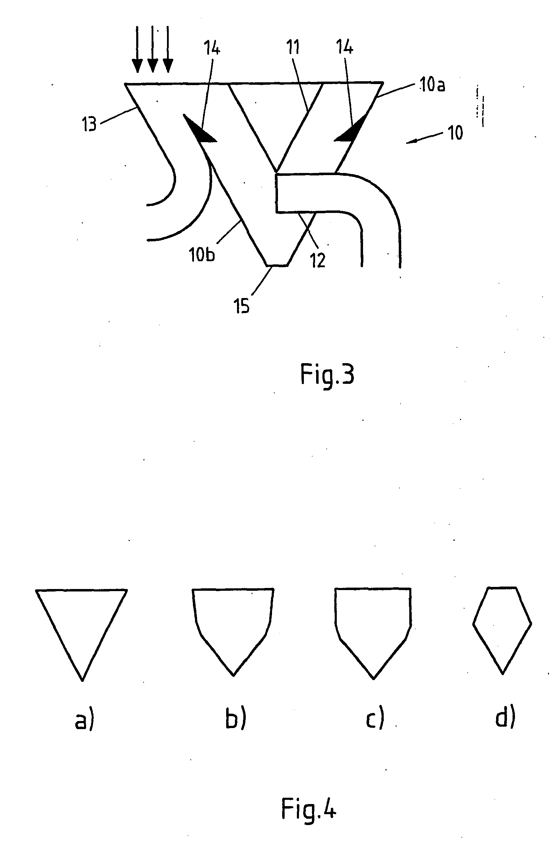

Fig. 3 zeigt einen erfindungsgemäßen Zyklonabscheider in einer Schemaansicht. Er umfasst ein Gehäuse 10, welches durch einen oberen Gehäuseabschnitt 10a und einen unteren Gehäuseabschnitt 10b gebildet ist. Beide Gehäuseabschnitte formen über ihre gesamte Höhe einen einheitlichen Konus. Ferner weist das Gehäuse 10 einen Innenkegel 11 auf, welcher bezogen auf das konische Gehäuse 10 mit im wesentlichen identischem Öffnungswinkel von der Oberseite des Gehäuses 10 nach unten ragt. Der Zyklonabscheider umfasst weiterhin eine Gaszuleitung 12. Erfindungsgemäß mündet diese bezogen auf die Gesamthöhe des Gehäuses 10 tangential in dessen unterer Hälfte. Die Gasableitung 13 des Gehäuses geht von der Seitenwand, d.h. der Mantelfläche des konischen Gehäuses 10 ab und wird unter Ausbildung einer Sinkgasstufe sodann nach unten geführt. Im Bereich der Gasumlenkung kann ein feinkörniges oder mehliges Gut, hier dargestellt durch Pfeile, aufgegeben werden. Hierbei kann über den gesamten Querschnitt der Gasableitung eine besonders homogene Durchmischung mit dem aus dem Zyklonabscheider austretenden Gasstrom erreicht werden, was zu einem besonders wirkungsvollen Wärmeaustausch zwischen Gut und Gasstrom führt.

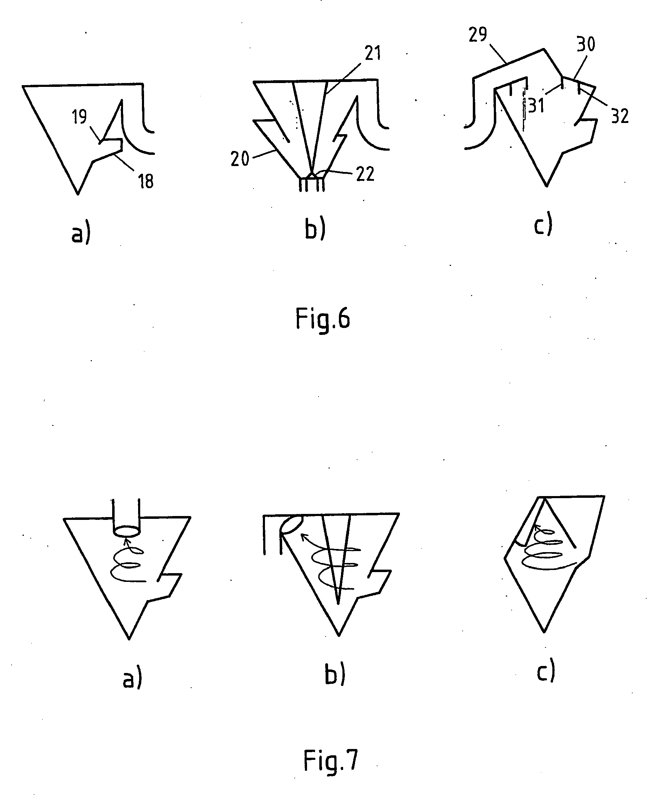

Ein solcher gutbeladener Gasstrom kann durch die Gaseinleitung 12 in das Gehäuse 10 tangential oder auch über eine Einlaufspirale (s. Fig. 6) eingeleitet werden. Innerhalb des Gehäuses 10 erfolgt dann ein mehrstufiger Abscheideprozess. Auf Höhe der Gaseinleitung erfolgt aufgrund des dem Gasstrom aufgezwungenen Dralls zunächst eine primäre Abscheidung der Gutpartikel. Diese ist hierbei besonders effektiv, da das konische Gehäuse 10 auf dieser Höhe bereits einen geringen Durchmesser aufweist. Innerhalb des Gehäuses 10 steigt der Gasstrom sodann spiralförmig auf, wobei es zu einer weiteren Abscheidung der Partikel kommt (sekundäre Abscheidung), die im wesentlichen durch eine Verringerung der Gasgeschwindigkeit und somit des Hebe- und Tragvermögens des Gasstroms bewirkt wird. Durch den Innenkegel 11 wird weitgehend eine Strömungsverwirbelung im Kernbereich des Abscheiders vermieden. Schließlich erfolgt eine tertiäre Abscheidung an einer im oberen Abschnitt 10a des Gehäuses 10 vorgesehenen Ringbarriere 14 in Form eines aus einer Mauerungsnase bestehenden umlaufenden Keils. Nach Passieren der Ringbarriere 14 tritt der praktisch vollständig abgereinigte Gasstrom in die Gasableitung 13 ein, während das abgeschiedene Gut durch die an der unteren Spitze des Gehäuses angeordneten Austrittsöffnung 15 aus dem Zyklonabscheider austritt.

In Fig. 4a bis d sind verschiedene Gehäusegrundformen eines erfindungsgemäßen Zyklonabscheiders dargestellt. Während der untere Gehäuseabschnitt stets konisch ausgebildet ist, kann der obere Gehäuseabschnitt verschiedene Geometrien annehmen. So ist dieser in den Fig. 4a und b ebenfalls konisch ausgebildet, wobei bei dem Abscheider der Fig. 4a ein einheitlicher Konus gebildet wird. Der obere Abschnitt des Zyklonabscheiders gemäß Fig. 4b ist ebenfalls konisch ausgebildet, weist jedoch einen geringeren Öffnungswinkel als der untere Abschnitt auf, so dass sich die dargestellte Geometrie ergibt. Bei dem Abscheider gemäß Fig. 4c ist der obere Gehäuseabschnitt zylindrisch ausgebildet, was einer aus dem Stand der Technik bekannten Form im wesentlichen entspricht (s. Fig. 10). Der Zyklonabscheider gemäß Fig. 4d Schließlich weist wiederum einen konisch geformten oberen Gehäuseabschnitt auf, der sich jedoch hierbei nach oben hin verjüngt, so dass sich insgesamt eine rhombische Form ergibt.

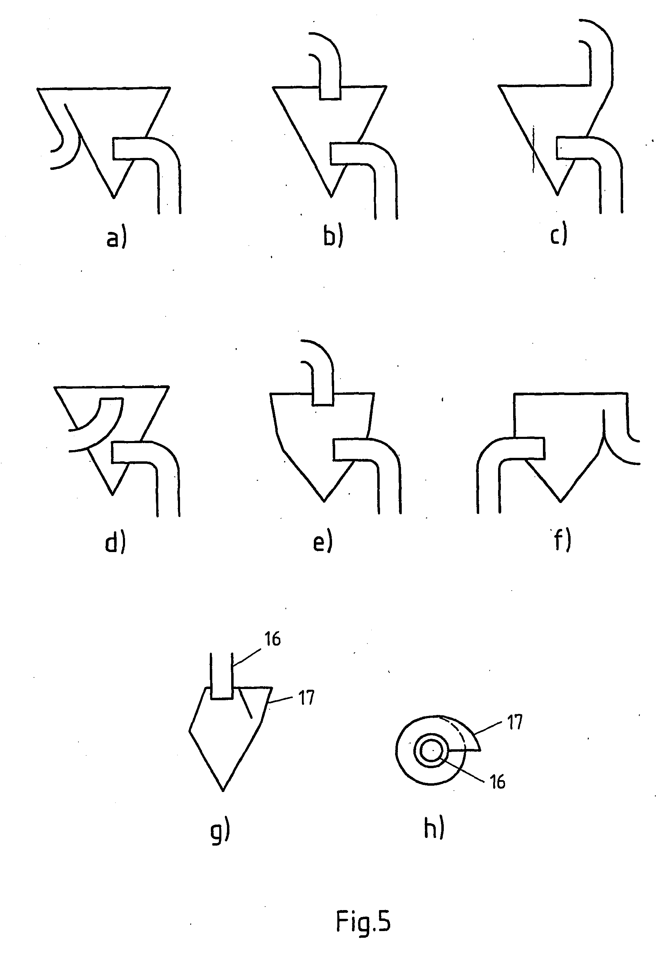

In Fig. 5 sind verschiedene Varianten der Gaszuleitung und -ableitung für die in Fig. a bis d gezeigten verschiedenen Zyklonabscheidergrundformen dargestellt.

Der Zyklonabscheider gemäß Fig. 5a entspricht bis auf den hier nicht dargestellten Innenkegel dem in Fig. 3 gezeigten. Der Zyklonabscheider gemäß Fig. 5b weist eine mittig auf der Oberseite des Gehäuses in das Gehäuse mündende Gasableitung in Form eines in das Gehäuse ragenden Hebestufentauchrohrs auf. In Fig. 5c ist die Gasableitung am ringförmigen oberen Rand des konischen Gehäuses angeordnet. Der Zyklonabscheider gemäß Fig. 5d weist als Gasableitung ein Sinkstufentauchrohr auf. Erfindungsgemäß erfolgt die Gaszuleitung, wie auch bei den Abscheidern der Fig. 5a bis c, in der bezogen auf die Gesamthöhe des Gehäuses in der unteren Gehäusehälfte. Der Zyklonabscheider nach Fig. 5e weist die Grundform der Fig. 4b auf, entspricht ansonsten dem der Fig. 5b. Der Zyklonabscheider der Fig. 5f weist die Grundform der Fig. 4b auf, entspricht ansonsten im wesentlichen dem der Fig. 5a, wobei vorliegend die als Sinkstufe ausgebildete Gasableitung parallel zum zylindrischen oberen Gehäuseabschnitt, d.h. vertikal nach unten verläuft. Der Zyklonabscheider der Fig. 5g Schließlich weist die in Fig. 4d dargestellte rhombische Grundform auf. Die Gasableitung ist hierbei als Hebestufentauchrohr 16 ausgebildet. Die Besonderheit dieser Ausführungsform besteht darin, dass die Gaseinleitung über eine Einlaufspirale 17 in das Gehäuse mündet. Dies ist in Fig. 5h in einer Draufsicht dargestellt. Da die Gaszuleitung spiralförmig in die obere Gehäusehälfte mündet, ist der Zyklonabscheider gemäß Fig. 5g hinsichtlich dieses Merkmals von konventioneller Bauart.

In den Fig. 6a bis c sind verschiedene Varianten der Innengeometrie eines erfindungsgemäßen Zyklonabscheiders mit vollständig konischer Gehäuseform (s. Fig. 4a) in schematischer Schnittansicht dargestellt.

Die Gaseinleitung bei dem Zyklonabscheider der Fig. 6a erfolgt über eine Einlaufspirale, wobei an der Mündung der Einlaufspirale in das Gehäuse ein Tauchringsegment 19 vorgesehen ist, welches bereits an dieser Stelle die Gutabscheidung unterstützt. Der Zyklonabscheider gemäß Fig. 6b zeichnet sich durch eine sich schraubenförmig nach unten windende Einlaufspirale 20 sowie einen Innenkegel 21 aus, der zentral auf einem in der Austrittsöffnung des Gehäuses angeordneten weiteren Innenkegel 22 abgestützt ist.

Der Zyklonabscheider gemäß Fig. 6c weist als Besonderheit einen leicht konisch geformten Deckel 30 auf. Die Gaseinleitung 29 ist als Sinkstufe mit in das Gehäuse hineinragendem Rand 31 ausgebildet. Neben dem als Ringbarriere wirkenden Rand 31 ist unterhalb des konischen Deckels 30 eine weitere Ringbarriere 32 vorgesehen. Die Gaseinleitung ist in der in Bezug auf Fig. 6a beschriebenen Weise ausgebildet.

Es versteht sich, dass die in den vorstehenden Fig. abgebildeten Besonderheiten sich miteinander kombinieren lassen.

In Fig. 7a bis c sind verschiedene Varianten der Gasabströmung bei einem erfindungsgemäß Zyklonabscheider dargestellt. Bei dem in Fig. 7a schematisch dargestellten vollkonischen Zyklonabscheider mit zentral angesetzter Gasableitung vollführt das über die Gaseinleitung einströmende gutbeladene Gas eine Zentralrotation. Im Falle des in Fig. 7b dargestellten Zyklonabscheiders mit am Rand angesetzter Gasableitung liegt eine Wandungsrotation vor. Diese wird durch den Einsatz eines Innenkegels noch unterstützt. Im Falle des in Fig. 7c abgebildeten Zyklonabscheiders mit rhombischer Gehäuseform ist die Gasableitung an der Wandung des durch den oberen Gehäuseabschnitt gebildeten oberen Konus angesetzt, wobei die Mündungsöffnung sich schlitzförmig bis zu dessen oberer Spitze erstreckt. In diesem Fall ist auch eine Kombinationsströmung aus Wandungs- und Zentralrotation möglich.

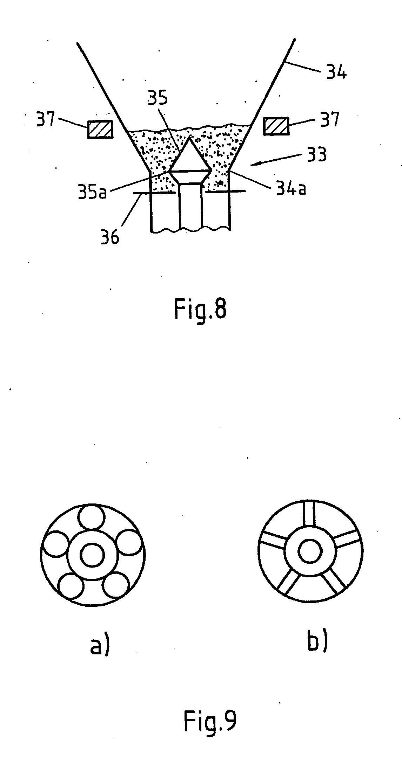

In Fig. 8 ist eine vorteilhafte Gestaltung der Austrittsöffnung bei einem erfindungsgemäßen Zyklonabscheider dargestellt. Die Austrittsöffnung 33 selbst weist einen ringförmigen Querschnitt auf, der außen durch die untere Kante des 34a des konischen Gehäuses 34 und innen durch die Unterkante 35a eines Innenkegels 35 mit nach oben weisender Spitze begrenzt wird. Der Innenkegel 35 dient einer verbesserten Gutverteilung über den Querschnitt. Unterhalb der ringförmigen Austrittsöffnung 33 ist eine geeignet ausgebildete Schließvorrichtung 36 angeordnet, mit welcher der Durchsatz des über die Austrittsöffnung des Abscheiders austretenden Gutes stufenlos eingestellt werden kann. Um im Abscheider beispielsweise einen konstanten Füllstand zu gewährleisten kann zusätzlich eine geeignete Sensorik 37 vorgesehen sein, welche mit einem nicht dargestellten Regelungskreis verbunden ist, der seinerseits die Schließvorrichtung steuert.

Wie in Fig. 9a im Querschnitt dargestellt, schließen sich an die ringförmige Austrittsöffnung mehrere Fallleitungen mit jeweils runden Querschnitt an. Durch den Einsatz mehrerer Fallleitungen kann das in dem Zyklonabscheider abgeschiedene Gut besonders gleichmäßig zur nächsten Gasstufen, sei es eine Hebegas-, Sinkgas- oder Quergasstufe, transportiert werden. Vorzugsweise ändert sich der Querschnitt über den Verlauf der Fallleitung. So kann er von einem runden Querschnitt stetig in einen schlitzförmigen Auslaufquerschnitt übergehen, wie in Fig. 9b dargestellt, und mit diesem an die entsprechende Gasstufe, beispielsweise von oben an eine Sinkgasstufe, angeschlossen sein (nicht dargestellt).

## Patentansprüche

1. Mehrstufiger Wärmetauscher zum Wärmetausch zwischen einem Gasstrom (1c*) und einem feinkörnigen oder mehligen Gut (1 a), wobei:
- der Wärmetauscher mehrere in Gasströmungsrichtung (1c*) gesehen hintereinander angeordnete, jeweils wenigstens einen Zyklonabscheider (I, II, III, IV) umfassende Abscheiderstufen umfasst,
- jeder Zyklonabscheider (I, II, III, IV) umfasst:
i) ein Gehäuse (10), das eine Gesamthöhe aufweist und eine Seitenwand umfasst,
ii) eine Gaszuleitung (12), durch welche das mit dem abzuscheidenden Gut (1 a) beladene Gas in den Zyklonabscheider (I, II, III, IV) einströmt,
iii) eine Gasableitung (13), durch welche das von dem Gut (1 a) gereinigte Gas aus dem Zyklonabscheider (I, II, III, IV) ausströmt, und
iv) eine am unteren Ende des Gehäuses (10) angeordneten Austrittsöffnung (15) zum Ausschleusen des abgeschiedenen Gutes (1a),
- die Gasableitung (13) jeweils eines Zyklonabscheiders (11, III, IV) mit der Gaszuleitung (12) des in Gasströmungsrichtung (1c*) nächstfolgenden Zyklonabscheiders (I, II, III) über eine Gasstufe (3, 4, 5) verbunden ist,
**dadurch gekennzeichnet, dass**:
- wenigstens zwei Gasstufen als Sinkgasstufe (3, 5) ausgebildet sind,
- das zu erwärmende Gut (1 a) oberseitig in jede Sinkgasstufe (3, 5) aufgegeben wird;
- bei wenigstens einem Zyklonabscheider (III), welcher in Gasströmungsrichtung (1c*) hinter einer Sinkgasstufe (3, 5) angeordnet ist, die Gaszuleitung (12) bezogen auf die Gesamthöhe des Gehäuses (10) in die untere Hälfte (10b) des Gehäuses (10) oder auf mittlerer Höhe in das Gehäuse (10) mündet.

2. Wärmetauscher nach Anspruch 1, **dadurch gekennzeichnet, dass** in Gasströmungsrichtung (1c*) gesehen jede zweite Gasstufe als Sinkgasstufe (3, 5) oder Quergasstufe (5*) ausgebildet ist.

3. Wärmetauscher nach Anspruch 1 oder 2, **dadurch gekennzeichnet, dass** der Wärmetauscher vier- oder sechsstufig ausgelegt ist.

4. Wärmetauscher nach einem der vorhergehenden Ansprüche, **dadurch gekennzeichnet, dass** bei jedem Zyklonabscheider (II, IV), welcher in Gasströmungsrichtung (1c*) vor einer Sinkgasstufe (3, 5) angeordnet ist, die Gasableitung (13) in die Seitenwand mündet.

5. Wärmetauscher nach Anspruch 4, **dadurch gekennzeichnet, dass** bei jedem Zyklonabscheider (II, IV), welcher in Gasströmungsrichtung (1c*) vor einer Sinkgasstufe (3, 5) angeordnet ist, die Gasableitung (13) im oberen Teil des Gehäuses (10) mündet.

6. Wärmetauscher nach einem der vorhergehenden Ansprüche, **dadurch gekennzeichnet, dass** bei dem Zyklonabscheider (III), der in Gasströmungsrichtung (1c*) unmittelbar hinter einer Sinkgasstufe (3, 5) angeordnet ist, das Gehäuse (10) einen oberen Gehäuseabschnitt (10a) und einen konisch nach unten zulaufenden unteren Gehäuseabschnitt (10b) umfasst.

7. Wärmetauscher nach Anspruch 6, **dadurch gekennzeichnet, dass** der obere Gehäuseabschnitt (10a) nach unten hin konisch zulaufend ausgebildet ist.

8. Wärmetauscher nach Anspruch 7, **dadurch gekennzeichnet, dass** der obere und der untere Gehäuseabschnitt (10a, 10b) einen einheitlichen Konus ausbilden.

9. Wärmetauscher nach Anspruch 6, **dadurch gekennzeichnet, dass** der obere Gehäuseabschnitt (10a) zylindrisch ausgebildet ist.

10. Wärmetauscher nach Anspruch 6, **dadurch gekennzeichnet, dass** der obere Gehäuseabschnitt (10a) nach oben hin konisch zulaufend ausgebildet ist.

11. Wärmetauscher nach Anspruch 10, **dadurch gekennzeichnet, dass** die Mündungsöffnung der Gasableitung (13) sich schlitzförmig bis an die obere Spitze des oberen Gehäuseabschnitts (10a) erstreckt.

12. Wärmetauscher nach einem der Ansprüche 6 bis 11, **dadurch gekennzeichnet, dass** das Gehäuse (10) einen Innenkegel (11) aufweist.

13. Wärmetauscher nach einem der Ansprüche 6 bis 12, **dadurch gekennzeichnet, dass** an der Innenwand des Gehäuses (10) eine Ringbarriere (14) vorgesehen ist.

14. Wärmetauscher nach Anspruch 13, **dadurch gekennzeichnet, dass** die Ringbarriere (14) als aus einer Maüerungsnase bestehender umlaufender Keil ausgebildet ist.

15. Wärmetauscher nach einem der Ansprüche 6 bis 14, **dadurch gekennzeichnet, dass** die Gaszuleitung (12) über eine schraubenförmig ausgebildete Einlaufspirale (17, 18, 20) in das Gehäuse mündet.

16. Wärmetauscher nach einem der Ansprüche 6 bis 15, **dadurch gekennzeichnet, dass** die Gasableitung (13) mittig auf der Oberseite des Gehäuses (10) in das Gehäuse (10) mündet.

17. Wärmetauscher nach Anspruch 16 **dadurch gekennzeichnet, dass** die Gasableitung (13) als Tauchrohr in das Gehäuse (10) hineinragt.

18. Wärmetauscher nach einem der Ansprüche 6 bis 15 **dadurch gekennzeichnet, dass** die Gasableitung (13) in die Seitenwand des Gehäuses (10) mündet.

19. Wärmetauscher nach einem der Ansprüche 6 bis 18, **dadurch gekennzeichnet, dass** die Austrittsöffnung (15) einen ringförmigen Querschnitt hat.

20. Wärmetauscher nach Anspruch 19, **dadurch gekennzeichnet, dass** der ringförmige Querschnitt durch eine kreisförmige Austrittsöffnung und einen in dieser angeordneten Innenkegel (35) gebildet ist.

21. Wärmetauscher nach einem der Ansprüche 6 bis 20, **dadurch gekennzeichnet, dass** sich an die Austrittsöffnung mehrere Fallleitungen anschließen.

22. Wärmetauscher nach Anspruch 21, **dadurch gekennzeichnet, dass** die wenigstens eine Fallleitung einen runden Querschnitt aufweist.

23. Wärmetauscher nach Anspruch 21 oder 22, **dadurch gekennzeichnet, dass** die wenigstens eine Fallleitung einen schlitzförmigen Auslaufquerschnitt aufweist.

24. Wärmetauscher nach einem der Ansprüche 21 bis 23, **dadurch gekennzeichnet, dass** die wenigstens eine Fallleitung eine Dosiervorrichtung aufweist.

## Claims

1. Multi-stage heat exchanger for exchanging heat between a gas flow (1c*) and a fine-grained or floury product (1a),
- the heat exchanger comprising a plurality of separator stages arranged one after the other in the gas flow direction (1c*) and each comprising at least one cyclone separator (I, II, III, IV),
- each cyclone separator (I, II, III, IV) comprising:
i) a housing (10), which has an overall height and comprises a side wall,
ii) a gas feed line (12), through which the gas charged with the product (1a) to be separated flows into the cyclone separator (I, II, III, IV),
iii) a gas discharge line (13), through which the gas cleaned of the product (1a) flows out of the cyclone separator (I, II, III, IV), and
iv) an outlet opening (15), arranged at the lower end of the housing (10), for removing the separated product (1a),
- the gas discharge line (13) of in each case one cyclone separator (II, III, IV) being connected to the gas feed line (12) of the cyclone separator (I, II, III) next in the gas flow direction (1c*) via a gas stage (3, 4, 5),
**characterised in that**:
- at least two gas stages are formed as a sinking gas stage (3, 5),
- the product (1a) to be heated is fed into each sinking gas stage (3, 5) at the top side;
- in the case of at least one cyclone separator (III) which is arranged after a sinking gas stage (3, 5) in the gas flow direction (1c*), the gas feed line (12) opens into the lower half (10b) of the housing (10) or at the mid-height into the housing (10), in relation to the overall height of the housing (10).

2. Heat exchanger according to Claim 1, **characterised in that** every second gas stage in the gas flow direction (1c*) is configured as a sinking gas stage (3, 5) or transverse gas stage (5*).

3. Heat exchanger according to Claim 1 or 2, **characterised in that** the heat exchanger is of four- or six-stage design.

4. Heat exchanger according to one of the preceding claims, **characterised in that**, in the case of each cyclone separator (II, IV) which is arranged before a sinking gas stage (3, 5) in the gas flow direction (1c*), the gas discharge line (13) opens into the side wall.

5. Heat exchanger according to Claim 4, **characterised in that**, in the case of each cyclone separator (II, IV) which is arranged before a sinking gas stage (3, 5) in the gas flow direction (1c*), the gas discharge line (13) opens into the upper part of the housing (10).

6. Heat exchanger according to one of the preceding claims, **characterised in that**, in the case of the cyclone separator (III) which is arranged directly after a sinking gas stage (3, 5) in the gas flow direction (1c*), the housing (10) comprises an upper housing section (10a) and a conically downwardly tapering lower housing section (10b).

7. Heat exchanger according to Claim 6, **characterised in that** the upper housing section (10a) is of downwardly conically tapering form.

8. Heat exchanger according to Claim 7, **characterised in that** the upper and lower housing sections (10a, 10b) form a uniform cone.

9. Heat exchanger according to Claim 6, **characterised in that** the upper housing section (10a) is of cylindrical form.

10. Heat exchanger according to Claim 6, **characterised in that** the upper housing section (10a) is of upwardly conically tapering form.

11. Heat exchanger according to Claim 10, **characterised in that** the mouth of the gas discharge line (13) extends in the form of slot up to the upper apex of the upper housing section (10a).

12. Heat exchanger according to one of Claims 6 to 11, **characterised in that** the housing (10) has an inner cone (11).

13. Heat exchanger according to one of Claims 6 to 12, **characterised in that** an annular barrier (14) is provided on the inner wall of the housing (10).

14. Heat exchanger according to Claim 13, **characterised in that** the annular barrier (14) is formed as a circumferential wedge consisting of a wall projection.

15. Heat exchanger according to one of Claims 6 to 14, **characterised in that** the gas feed line (12) opens into the housing via a helically formed inlet spiral (17, 18, 20).

16. Heat exchanger according to one of Claims 6 to 15, **characterised in that** the gas discharge line (13) opens into the housing (10) centrally on the top side of the housing (10).

17. Heat exchanger according to Claim 16, **characterised in that** the gas discharge line (13) projects as an immersion pipe into the housing (10).

18. Heat exchanger according to one of Claims 6 to 15, **characterised in that** the gas discharge line (13) opens into the side wall of the housing (10).

19. Heat exchanger according to one of Claims 6 to 18, **characterised in that** the outlet opening (15) has an annular cross-section.

20. Heat exchanger according to Claim 19, **characterised in that** the annular cross-section is formed by a circular outlet opening and an inner cone (35) arranged in the latter.

21. Heat exchanger according to one of Claims 6 to 20, **characterised in that** a plurality of downpipes are connected to the outlet opening.

22. Heat exchanger according to Claim 21, **characterised in that** the at least one downpipe has a round cross-section.

23. Heat exchanger according to Claim 21 or 22, **characterised in that** the at least one downpipe has a slot-shaped outlet cross-section.

24. Heat exchanger according to one of Claims 21 to 23, **characterised in that** the at least one downpipe has a metering device.

## Revendications

1. Échangeur thermique à plusieurs étages pour l'échange de chaleur entre un flux de gaz (1c*) et un produit (1a) à grains fins ou pulvérulent, sachant que :
- l'échangeur thermique comporte plusieurs étages de séparation, disposés les uns derrière les autres par référence à la direction du flux de gaz (1c*) et comportant chacun au moins un cyclone séparateur (I, II, III, IV),
- chaque cyclone séparateur (I, II, III, IV) comporte :
i) un carter (10), qui possède une hauteur totale et comporte une paroi latérale,
ii) une conduite d'admission de gaz (12), par laquelle le gaz chargé du produit (1a) à séparer afflue dans le cyclone séparateur (I, II, III, IV),
iii) une conduite de sortie de gaz (13), par laquelle le gaz épuré, séparé du produit (1a), sort du cyclone séparateur (I, II, III, IV), et
iv) un orifice de sortie (15), agencé à l'extrémité inférieure du carter (10) et destiné à l'évacuation du produit (1a) séparé,
- la conduite de sortie du gaz (13) de respectivement un cyclone séparateur (II, III, IV) est reliée à la conduite d'admission de gaz (12) du cyclone séparateur (I, II, III) suivant, par référence à la direction du flux de gaz (1c*), par l'intermédiaire d'un palier de gaz (3, 4, 5),
**caractérisé en ce que**
- au moins deux paliers de gaz sont réalisés sous la forme d'un palier de gaz décanté (3, 5),
- le produit (1a) à chauffer est admis du côté supérieur dans chaque palier de gaz décanté (3, 5),
- dans au moins un cyclone séparateur (III) qui, par référence à la direction du flux de gaz (1c*), est monté en aval d'un palier de gaz décanté (3, 5), la conduite d'admission de gaz (12) débouche dans le carter (10) dans la moitié inférieure (10b) du carter (10) ou à une hauteur moyenne par rapport à la hauteur totale du carter (10).

2. Échangeur thermique selon la revendication 1, **caractérisé en ce que** dans la direction du flux de gaz (1c*), chaque deuxième palier de gaz est réalisé sous la forme d'un palier de gaz décanté (3, 5) ou d'un palier de gaz transversal (5*).

3. Échangeur thermique selon la revendication 1 ou 2, **caractérisé en ce que** l'échangeur thermique est réalisé avec quatre ou six étages.

4. Échangeur thermique selon l'une quelconque des revendications précédentes, **caractérisé en ce que** dans chaque cyclone séparateur (II, IV) qui, par référence à la direction du flux de gaz (1c*), est disposé en amont d'un palier de gaz décanté (3, 5), la conduite de sortie de gaz (13) débouche dans la paroi latérale.

5. Échangeur thermique selon la revendication 4, **caractérisé en ce que** dans chaque cyclone séparateur (II, IV) qui, par référence à la direction du flux de gaz (1c*), est disposé en amont d'un palier de gaz décanté (3, 5), la conduite de sortie de gaz (13) débouche dans la partie supérieure du carter (10) .

6. Échangeur thermique selon l'une quelconque des revendications précédentes, **caractérisé en ce que**, dans le cyclone séparateur (III) qui, dans la direction du flux de gaz (1c*), est monté directement en aval d'un palier de gaz décanté (3, 5), le carter (10) comporte une partie supérieure (10a) et une partie inférieure (10b) qui se rétrécit vers le bas en forme de cône.

7. Échangeur thermique selon la revendication 6, **caractérisé en ce que** la partie supérieure (10a) du carter est réalisée en se rétrécissant en forme de cône vers le bas.

8. Échangeur thermique selon la revendication 7, **caractérisé en ce que** la partie supérieure (10a) et la partie inférieure (10b) du carter forment un cône unitaire.

9. Échangeur thermique selon la revendication 6, **caractérisé en ce que** la partie supérieure (10a) du carter est réalisée avec une forme cylindrique.

10. Échangeur thermique selon la revendication 6, **caractérisé en ce que** la partie supérieure (10a) du carter est réalisée en se rétrécissant en forme de cône vers le haut.

11. Échangeur thermique selon la revendication 10, **caractérisé en ce que** la bouche de la conduite de sortie de gaz (13) s'étend en forme de fente jusqu'à l'extrémité supérieure de la partie supérieure (10a) du carter.

12. Échangeur thermique selon l'une quelconque des revendications 6 à 11, **caractérisé en ce que** le carter (10) comporte un cône intérieur (11).

13. Échangeur thermique selon l'une quelconque des revendications 6 à 12, **caractérisé en ce qu'**une barrière annulaire (14) est prévue sur la paroi intérieure du carter (10).

14. Échangeur thermique selon la revendication 13, **caractérisé en ce que** la barrière annulaire (14) est réalisée sous la forme d'une clavette périphérique formée par un bec de maçonnerie.

15. Échangeur thermique selon l'une quelconque des revendications 6 à 14, **caractérisé en ce que** la conduite d'admission de gaz (12) débouche dans le carter par l'intermédiaire d'une spirale d'entrée (17, 18, 20), réalisée avec une forme hélicoïdale.

16. Échangeur thermique selon l'une quelconque des revendications 6 à 15, **caractérisé en ce que** la conduite de sortie de gaz (13) débouche dans le carter (10) au milieu sur le côté supérieur du carter (10).

17. Échangeur thermique selon la revendication 16, **caractérisé en ce que** la conduite de sortie de gaz (13) s'engage sous forme de tube plongeur dans le carter (10).

18. Échangeur thermique selon l'une quelconque des revendications 6 à 15, **caractérisé en ce que** la conduite de sortie de gaz (13) débouche dans la paroi latérale du carter (10).

19. Échangeur thermique selon l'une quelconque des revendications 6 à 18, **caractérisé en ce que** l'orifice de sortie (15) a une section annulaire.

20. Échangeur thermique selon la revendication 19, **caractérisé en ce que** la section annulaire est formée par un orifice de sortie circulaire et un cône intérieur (35) agencé dans celui-ci.

21. Échangeur thermique selon l'une quelconque des revendications 6 à 20, **caractérisé en ce que** plusieurs tuyaux de descente se raccordent à l'orifice de sortie.

22. Échangeur thermique selon la revendication 21, **caractérisé en ce que** ledit au moins un tuyau de descente a une section ronde.

23. Échangeur thermique selon la revendication 21 ou 22, **caractérisé en ce que** ledit au moins un tuyau de descente a une section de sortie en forme de fente.

24. Échangeur thermique selon l'une quelconque des revendications 21 à 23, **caractérisé en ce que** ledit au moins un tuyau de descente comporte un dispositif de dosage.
